# EUROPEAN PATENT APPLICATION

(11) **EP 4 319 262 A1**
(43) Date of publication of application: **07.02.2024**
(21) Application number: 22779068.0
(22) Date of filing: 31.03.2022
(51) Int. Cl.: H04W 24/08, H04W 36/00

(54) **TRANSMISSION METHOD AND APPARATUS, AND DEVICE AND READABLE STORAGE MEDIUM**

(30) Priority: 31.03.2021 CN 202110348038
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHEN, Ningyu, Beijing 100032 (CN); TAN, Jiayao, Beijing 100032 (CN); LI, Nan, Beijing 100032 (CN); HU, Nan, Beijing 100032 (CN)
(74) Representative: GPI Brevets
(86) International application number: PCT/CN2022/084354
(87) International publication number: WO 2022/206887

(57) **Abstract**

A transmission method and apparatus, a device and a readable storage medium are provided. The method includes: reporting a first report to a network side in a case that one or more of a first service, a first slice, a first session, a first channel, a first request, and a first radio bearer satisfy a condition.

## Description

### CROSS-REFERENCE TO RELATED APPLICATION

This application claims a priority to Chinese Patent Application No. 202110348038.8 filed in China on March 31, 2021, the disclosures of which are incorporated in their entirety by reference herein.

### TECHNICAL FIELD

Embodiments of the present application relate to the technical field of communications, and in particular, to a transmission method, a transmission apparatus, a transmission device, and a readable storage medium.

### BACKGROUND

A terminal in an idle state may perform measurement when waking up during discontinuous reception (DRX), such as measurement of a serving cell, an intra-frequency neighboring cell, and an inter-frequency neighboring cell.

In a current Minimization Drive Test (MDT) technology, the Minimization Drive Test (MDT) technology includes Logged MDT and immediate MDT. If the network side configures the Logged MDT for the terminal, the terminal periodically logs a report.

After receiving measurement configuration from a network side, the terminal in a connected state will start the measurement, and triggers reporting when a reporting condition is met.

If a radio link failure occurs, the terminal logs and reports the radio link failure.

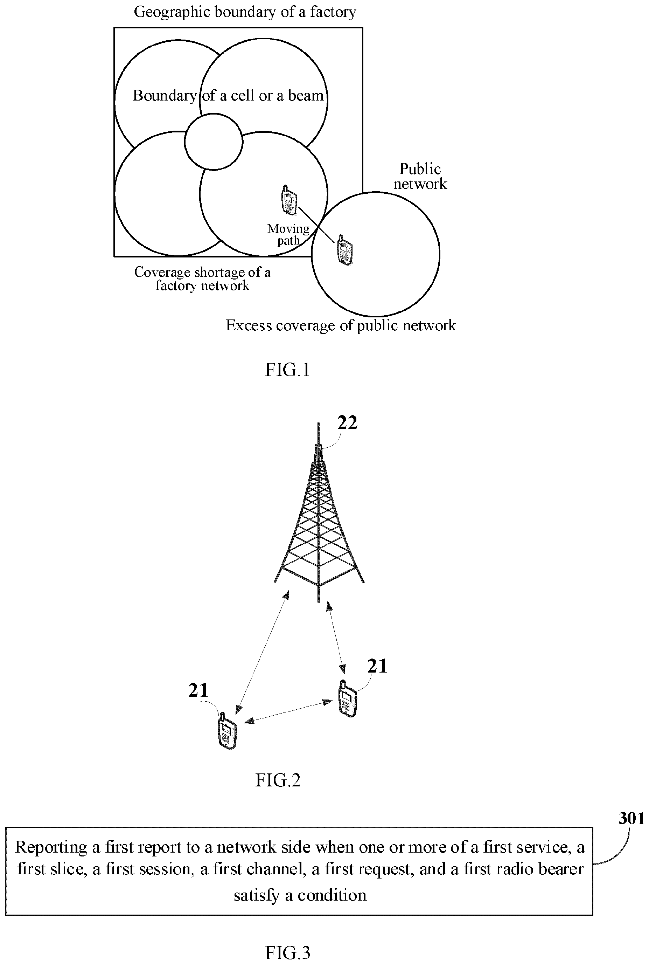

In one region, such as a factory, a service or slice is deployed without deploying a service or a slice outside the region. Due to a fact that a boundary of network planning is not necessarily the same as a boundary of a service or a slice service, the service or slice service may be lost when the terminal moves in the factory, although there is still a wireless signal. Referring to FIG. 1, a circle in FIG.1 represents coverage of a cell or a beam, and a square represents a geographic boundary of the factory. However, existing MDT and Radio Link Failure Report (RLF Report) mechanisms can only detect vulnerabilities of signal coverage, and cannot identify vulnerabilities of services or slice services.

### SUMMARY

Embodiments of the present application provide a transmission method, a transmission apparatus, a device, and a readable storage medium, which solve the problem of how to identify a vulnerability of a service or a slice service.

In a first aspect, a transmission method performed by a terminal is provided. The method includes: reporting a first report to a network side in a case that one or more of a first service, a first slice, a first session, a first channel, a first request, and a first radio bearer satisfy a condition.

Optionally, the method further includes receiving configuration information, wherein the configuration information is configured to configure the terminal to report the first report to the network side in case that one or more of the first service, the first slice, the first session, the first channel, the first request, and the first radio bearer satisfy the condition.

Optionally, reporting the first report to the network side includes: if the terminal is in a connected state, reporting the first report to the network side; if the terminal is in an idle state or an inactive state, recording the first report, and reporting the first report to the network side.

Optionally, the method further includes: if the terminal is located in a first region, determining whether one or more of the first service, the first slice, the first session, the first channel, the first request, and the first radio bearer satisfy the condition.

Optionally, the information of the first region includes: a group of geographic location information, or a cell list, or a tracking area list, or a Bluetooth identifier, or a wireless local area network (WLAN) identifier.

Optionally, the information of the first region is configured by a network side or agreed by a protocol.

Optionally, the method further includes: reporting a terminal capability, wherein the terminal capability indicates whether the terminal supports reporting the first report to the network side in a case that one or more of the first service, the first slice, the first session, the first channel, the first request, and the first radio bearer satisfy the condition.

Optionally, the condition includes: a first condition and/or a second condition, the first condition includes one or more of following:
disconnection of the first service,
disconnection, release, or re-mapping of the first slice,
disconnection of the first session,
disconnection of the first radio bearer,
initiation failure of the first slice or the first service,
failure of the first request,
a bit error rate of the first channel exceeding a preset threshold,
failing to detect the first channel in a serving cell,
an indicator parameter of the first service, the first slice, the first session,
the first channel, the first request, or the first radio bearer being lower than a preset threshold;
the second condition comprises one or more of following: recovery of the first service, recovery of the first slice, recovery of the first session, reconstruction of the first radio bearer.

Optionally, the initiation failure of the first slice or the first service indicates that the terminal initiates the first slice or the first service, but is rejected by a protocol layer in the terminal, rejected by the network side, or prohibited by a protocol; the failure of the first request indicates that the terminal initiates the first request, but is rejected by a protocol layer in the terminal, rejected by the network side, or prohibited by a protocol.

Optionally, the configuration information further includes one or more of following:
first time information, wherein the first time information indicates a time interval at which the terminal reports the first report;
a quantity of initiation failures or disconnections of the first service and/or a duration of initiation failure or disconnection of the first service;
a quantity of initiation failures, disconnections, releases, or remapping of the first slice and/or a duration of initiation failure, disconnection, release, or remapping of the first slice;
a quantity of disconnections of a session of the first service and/or a duration of disconnection of a session of the first service;
a quantity of disconnections of a radio bearer of the first service and/or a duration of disconnection of a radio bearer of the first service;
an identifier of the first service;
an identifier of the first session;
an identifier of the first slice;
an identifier of the first radio bearer;
an identifier of the first channel;
an identifier of the first request.

Optionally, the first report includes one or more of following:
information of a source cell;
information of a target cell;
information of a reconnected cell;
beam information of a source cell;
beam information of a target cell;
location information of the terminal;
second time information, wherein the second time information indicates a time instant at which the terminal obtains or records the first report;
third time information, wherein the third time information represents a time instant at which the condition is satisfied or a duration for which the condition is satisfied;
information of a slice and/or a quantity of initiation failures, disconnections, release, or remapping of the slice and/or a duration of initiation failure, disconnection, release, or remapping of the slice;
an identifier of a radio bearer and/or a quantity of disconnections of the radio bearer and/or a duration of disconnection of the radio bearer;
an identifier of a service and/or a quantity of initiation failures or disconnections of the service and/or a duration of initiation failure or disconnection of the service;
an identifier of a session and/or a quantity of disconnections of the session and/or a duration of disconnection of the session;
an identifier of a channel and/or a quantity of disconnections of the channel and/or a duration of disconnection of the channel.

The information is an identifier, such as the information of the source cell is the identifier of the source cell, the information of the slice is the identifier of the slice. During handover, the source cell is the serving cell of the terminal before the handover, the target cell is the target cell to which the terminal hands over. In a non-handover scenario, the source cell is the current serving cell of the terminal.

In a second aspect, a transmission method performed by a network-side device is provided. The method includes: receiving a first report reported by a terminal in a case that one or more of a first service, a first slice, a first session, a first channel, a first request, and a first radio bearer satisfy a condition.

Optionally, the method further includes: sending configuration information, wherein the configuration information is configured to configure the terminal to report the first report in case that one or more of the first service, the first slice, the first session, the first channel, the first request, and the first radio bearer satisfy the condition.

Optionally, the method includes: receiving a terminal capability, wherein the terminal capability indicates whether the terminal supports reporting the first report to the network side if one or more of the first service, the first slice, the first session, the first channel, the first request, and the first radio bearer satisfy the condition.

Optionally, the condition includes: a first condition and/or a second condition, the first condition includes one or more of following:
disconnection of the first service,
disconnection, release, or re-mapping of the first slice,
disconnection of the first session,
disconnection of the first radio bearer,
initiation failure of the first slice or the first service,
failure of the first request,
a bit error rate of the first channel exceeding a preset threshold,
failing to detect the first channel in a serving cell,
an indicator parameter of the first service, the first slice, the first session, the first channel, the first request, or the first radio bearer being lower than a preset threshold;
the second condition includes one or more of following:
recovery of the first service, recovery of the first slice, recovery of the first session, reconstruction of the first radio bearer.

Optionally, the initiation failure of the first slice or the first service indicates that the terminal initiates the first slice or the first service, but is rejected by a protocol layer in the terminal, rejected by the network side, or prohibited by a protocol; the failure of the first request indicates that the terminal initiates the first request, but is rejected by a protocol layer in the terminal, rejected by the network side, or prohibited by a protocol.

Optionally, the configuration information further includes one or more of following:
first time information, wherein the first time information indicates a time interval at which the terminal reports the first report;
a quantity of initiation failures or disconnections of the first service and/or a duration of initiation failure or disconnection of the first service;
a quantity of initiation failures, disconnections, releases, or remapping of the first slice and/or a duration of initiation failure, disconnection, release, or remapping of the first slice;
a quantity of disconnections of a session of the first service and/or a duration of disconnection of a session of the first service;
a quantity of disconnections of a radio bearer of the first service and/or a duration of disconnection of a radio bearer of the first service;
an identifier of the first service;
an identifier of the first session;
an identifier of the first slice;
an identifier of the first radio bearer;
an identifier of the first channel;
an identifier of the first request.

Optionally, the first report includes one or more of following:
information of a source cell;
information of a target cell;
information of a reconnected cell;
beam information of a source cell;
beam information of a target cell;
location information of the terminal;
second time information, wherein the second time information indicates a time instant at which the terminal obtains or records the first report;
third time information, wherein the third time information represents a time instant at which the condition is satisfied or a duration for which the condition is satisfied;
information of a slice and/or a quantity of initiation failures, disconnections, release, or remapping of the slice and/or a duration of initiation failure, disconnection, release, or remapping of the slice;
an identifier of a radio bearer and/or a quantity of disconnections of the radio bearer and/or a duration of disconnection of the radio bearer;
an identifier of a service and/or a quantity of initiation failures or disconnections of the service and/or a duration of initiation failure or disconnection of the service;
an identifier of a session and/or a quantity of disconnections of the session and/or a duration of disconnection of the session;
an identifier of a channel and/or a quantity of disconnections of the channel and/or a duration of disconnection of the channel;
an identifier of a request and/or a quantity of disconnections of the request and/or a duration of disconnection of the request.

In a third aspect, a transmission apparatus applied to a terminal is provided. The apparatus includes: a first sending module, configured to report a first report to a network side in a case that one or more of a first service, a first slice, a first session, a first channel, a first request, and a first radio bearer satisfy a condition.

In a fourth aspect, a transmission apparatus applied to a network-side device is provided. The apparatus includes: a second receiving module, configured to receive a first report reported by a terminal in a case that one or more of a first service, a first slice, a first session, a first channel, a first request, and a first radio bearer satisfy a condition.

In a fifth aspect, a terminal is provided. The terminal includes: a processor, a memory, and a program stored on the memory and executable on the processor, wherein when the program is executed by the processor, the steps of the method according to the first aspect are implemented.

In a sixth aspect, a network side device is provided. The network side device includes: a processor, a memory, and a program stored on the memory and executable on the processor, wherein when the program is executed by the processor, the steps of the method according to the second aspect are implemented.

In a seventh aspect, a readable storage medium is provided, wherein a program is stored on the readable storage medium, and when the program is executed by a processor, the steps of the method according to the first aspect or the second aspect are implemented.

In the embodiments of the present application, after receiving the first report reported by the terminal, the network side determines the vulnerability of the service or the slice service according to the first report, and can adjust parameters such as the inclination angle and the beamforming of the cell or the beam according to the first report, so as to adjust the coverage of a certain service, a certain slice, a certain session, a certain channel, a certain request or a certain radio bearer at the interior, the exterior, and the boundary of the region, thereby effectively solving the problem of insufficient coverage of the certain service, the certain slice, the certain session, the certain channel, the certain request or the certain radio bearer in the region although coverage of a radio signal is perfect.

### BRIEF DESCRIPTION OF THE DRAWINGS

Various other advantages and benefits will become apparent to those of ordinary skill in the art upon reading detailed description of preferred embodiments below. The drawings are only used to illustrate objectives of the preferred embodiments, and are not to be considered as limiting the present application. Moreover, in the entire drawings, the same reference symbols are used to represent the same components. In the drawings:
FIG. 1 is a schematic diagram of existing network coverage;
FIG. 2 is a schematic diagram of a wireless communication system to which an embodiment of the present application is applicable;
FIG. 3 is a first flowchart of a transmission method according to some embodiments of the present application;
FIG. 4 is a second flowchart of a transmission method according to some embodiments of the present application;
FIG. 5 is a third flowchart of a transmission method according to some embodiments of the present application;
FIG. 6 is a fourth flowchart of a transmission method according to some embodiments of the present application;
FIG. 7 is a fifth flowchart of a transmission method according to some embodiments of the present application;
FIG. 8 is a sixth flowchart of a transmission method according to some embodiments of the present application;
FIG. 9 is a seventh flowchart of a transmission method according to some embodiments of the present application;
FIG. 10 is a first schematic diagram of a transmission apparatus according to some embodiments of the present application;
FIG. 11 is a second schematic diagram of a transmission apparatus according to some embodiments of the present application;
FIG. 12 is a schematic diagram of a terminal device according to some embodiments of the present application;
FIG. 13 is a schematic diagram of a network side device according to some embodiments of the present application.

### DETAILED DESCRIPTION

The technical solutions in the embodiments of the present application will be clearly and completely described below with reference to the accompanying drawings in the embodiments of the present application. Obviously, the described embodiments are only part, rather than all, of the embodiments of the present application. All other embodiments obtained by a person of ordinary skill in the art based on the embodiments of the present application without creative efforts shall fall within the protection scope of the present application.

The terms "comprising", 'including' and any variations thereof in the specification and claims of the present application are intended to cover non-exclusive inclusion, for example, processes, methods, systems, products, or devices comprising a series of steps or units are not necessarily limited to those steps or units clearly listed, but may include other steps or units not expressly listed or inherent to these processes, methods, products, or devices. In addition, the use of "and/or" in the specification and in the claims indicates at least one of the connected objects, such as A and/or B, indicating that there are three cases including a single A exists, a single B exists, and both A and B exist.

In the embodiments of the present application, words such as "exemplary" or "for example" are used to represent an example, an illustration, or a description. Any embodiment or design scheme described as "exemplary" or "for example" in the embodiments of the present application should not be construed as being more preferred or more advantageous than other embodiments or design schemes. Rather, the use of "exemplary" or "for example" is intended to present related concepts in a particular manner.

It should be noted that the techniques described in the embodiments of the present application are not limited to Long Term Evolution (LTE)/LTE Evolution (LTE-Advanced, LTE-A) systems, and may also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and other systems. The terms "system" and "network" in the embodiments of the present application are commonly used interchangeably, and the described techniques may be used both for the systems and radio technologies mentioned above, as well as other systems and radio technologies. However, following description describes New Radio (NR) systems for illustrative purposes, and NR terms are used in most of the following description, although these techniques may also be applied to applications other than NR system applications, such as 6th generation (6G) communication systems.

Referring to FIG. 2, a block diagram of a wireless communication system according to some embodiments of the present application is shown. The wireless communication system includes a terminal 21 and a network side device 22, where the terminal 21 may also be referred to as a terminal device or a user terminal (UE), and the terminal 21 may be a terminal-side device such as a mobile phone, a tablet personal computer, a laptop computer, or a personal digital assistant (PDA), a palm computer, a netbook, an ultra-mobile personal computer (UMPC), a mobile Internet device (MID), a wearable device or a vehicle user equipment (VUE), a Pedestrian User Equipment (PUE), and the like. The wearable device includes: a bracelet, earphones, glasses, and the like. It should be noted that, in this embodiment of the present application, a specific type of the terminal 21 is not limited. The network-side device 22 may be a base station or a core network, wherein the base station may be referred to as a Node B, an Evolved Node B, an Access Point, a Base Transceiver Station (BTS), a radio base station, a radio transceiver, a Basic Service Set (BSS), an Extended Service Set (Extended Service Set, ESS), a Node B, an evolved Node B (EWE), a Home B node, a Home Evolved Node B node, a Wireless Local Area Network (WLAN) access point, a WiFi hotspot, a Transmitting Receiving Point (TRP) or another suitable name in the art, as long as the same technical effect is achieved. The base station is not limited to a specific technical vocabulary, and it should be noted that in this embodiment of the present application, only the base station in the NR system is used as an example, but the specific type of the base station is not limited.

Referring to FIG. 3, an embodiment of the present application provides a transmission method, and an entity of performing the method may be a terminal, and the specific steps include:
Step 301: reporting a first report to a network side when one or more of a first service, a first slice, a first session, a first channel, a first request, and a first radio bearer satisfy a condition.

The first service herein may be understood as not specifically defining a type of the service, the first slice may be understood as not specifically defining a type of the network slice, the first session (or a specific protocol data unit (PDU) session) may be understood as not specifically defining a type of a session, the first radio bearer may be understood as not specifically defining a type of the radio bearer, and the first channel may be understood as not specifically defining a type of the channel. The first request may be a service request or a connection establishment request, etc.

That is, in a certain area, coverage of a wireless signal meets requirement, but the coverage of the service or the slice service does not meet requirement, the terminal may be triggered to report the first report to the network side, and the network side device may identify vulnerability of the service or the slice service according to the first report.

The service herein may be a unicast service, or may be a multicast or broadcast service. For a multicast or broadcast service, when it is monitored that the multicast or broadcast channel satisfies a certain condition, for example, a channel quality is reduced, a bit error rate exceeds a threshold, or a channel is not detected, the terminal may also be trigger reporting the first report to the network side.

In an embodiment of the present application, the first report may be used to assist the network-side device in identifying vulnerability of a service or a slice service, for example, the network-side device may learn which geographic location, which beam, which session occurs interruption, in this way, the network-side device may adjust a downtilt angle, beamforming, and the like of an antenna according to the first report reported by the terminal, so that coverage of a cell boundary can satisfy coverage boundary requirement desired by the terminal.

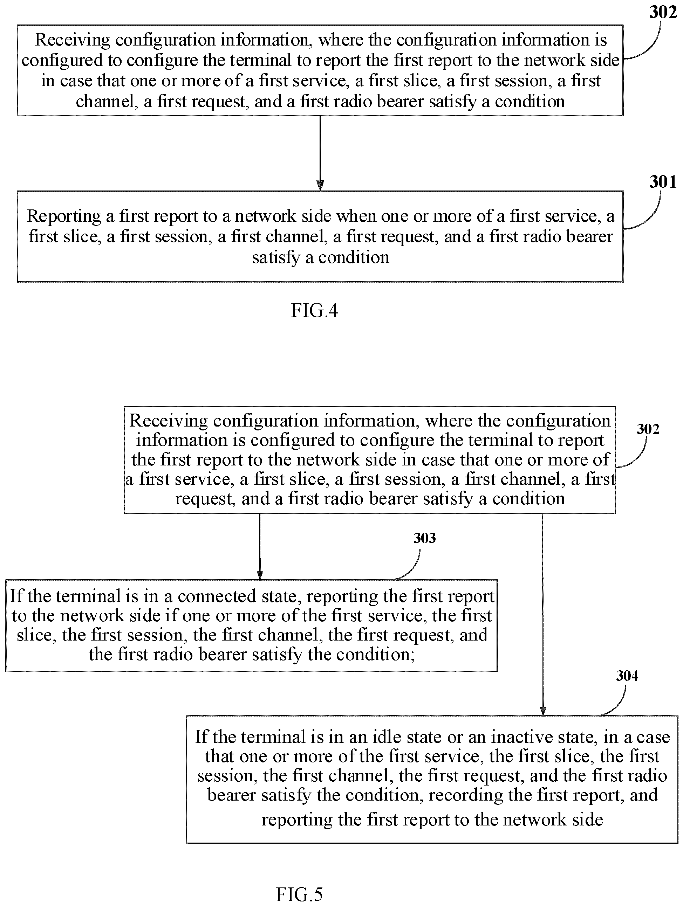

In another embodiment of the present application, referring to FIG. 4, before step 301, the method further includes:
Step 302: receiving configuration information, where the configuration information is configured to configure the terminal to report the first report to the network side in case that one or more of a first service, a first slice, a first session, a first channel, a first request, and a first radio bearer satisfy a condition.

In an embodiment of the present application, the configuration information further includes one or more of the following:
(1) first time information, where the first time information indicates a time interval at which the terminal reports the first report; for example, the first time information indicates the time interval (T) between two consecutive reports of the first report reported by the terminal, that is, after reporting once by the terminal, reporting is not made again within the time interval T, and excessive repeated reports are avoided;
(2) the number of disconnections of the first service and/or a duration of disconnection of the first service;
(3) the number of disconnections, releases, or remapping of a network slice corresponding to the first service and/or a duration of disconnection, release, or remapping of a network slice corresponding to the first service;
(4) the number of disconnections of a session corresponding to the first service and/or a duration of disconnection of a session corresponding to the first service;
(5) the number of disconnections of a radio bearer corresponding to the first service and/or a duration of disconnection of a radio bearer corresponding to the first service;
(6) an identifier of the first service;
(7) an identifier of the first session; for example, a identified slice ID (i.e. S-NSSAI) is disconnected;
(8) an identifier of the first slice; for example, the radio bearer corresponding to the identified 5QI is disconnected;
(9) an identifier of the first radio bearer; for example, the session corresponding to the identified 5QI is disconnected;
(10) an identifier of the first channel;
(11) an identifier of the first request.

In an embodiment of the present application, the first report includes one or more of the following:
(1) information of a source cell; for example, the ID of the source cell that is handed over or reselected;
(2) information of a target cell; for example, the ID of the target cell that is handed over or reselected;
(3) information of a reconnected cell; the reconnection refers to assuming that the present handover to the target cell fails, the terminal is reconnected to the third cell, and the third cell is a reconnected cell;
(4) beam information of a source cell; for example, a beam ID of a source cell that is handed over or reselected;
(5) beam information of the target cell; for example, a beam ID of the target cell that is handed over or reselected;
(6) location information of the terminal;
(7) second time information, where the second time information indicates a time instant at which the terminal obtains or records a first report;
(8) third time information, where the third time information represents a time instant at which the condition is satisfied or a duration for which the condition is satisfied;
(9) information of a slice and/or the number of initiation failures, disconnections, release, or remapping of the slice and/or a duration of initiation failure, disconnection, release, or remapping of the slice; for example, the information of the slice includes a slice ID or a slice group ID;
(10) an identifier of a radio bearer and/or the number of disconnections of the radio bearer and/or a duration of disconnection of the radio bearer;
(11) an identifier of a service and/or the number of initiation failures or disconnections of the service and/or a duration of initiation failure or disconnection of the service;
(12) an identifier of the session and/or the number of disconnections of the session and/or a duration of disconnection of the session;
(13) an identifier of a channel and/or the number of disconnections of the channel and/or a duration of disconnection of the channel.

The information refers to an identifier, for example, information of a source cell refers to the identifier of the source cell, and the information of the slice refers to an identifier of the slice.

During handover, the source cell refers to a serving cell before the terminal is handed over, and the target cell refers to a target cell to which the terminal is handed over.

In a non-handover scenario, the source cell refers to a current serving cell of the terminal.

In another embodiment of the present application, referring to FIG. 5, after step 302, the method further includes:
Step 303: if the terminal is in a connected state, reporting the first report to the network side if one or more of the first service, the first slice, the first session, the first channel, the first request, and the first radio bearer satisfy a condition;
Step 304: if the terminal is in an idle state or an inactive state, in a case that one or more of the first service, the first slice, the first session, the first channel, the first request, and the first radio bearer satisfy a condition, recording the first report, and reporting the first report to the network side.

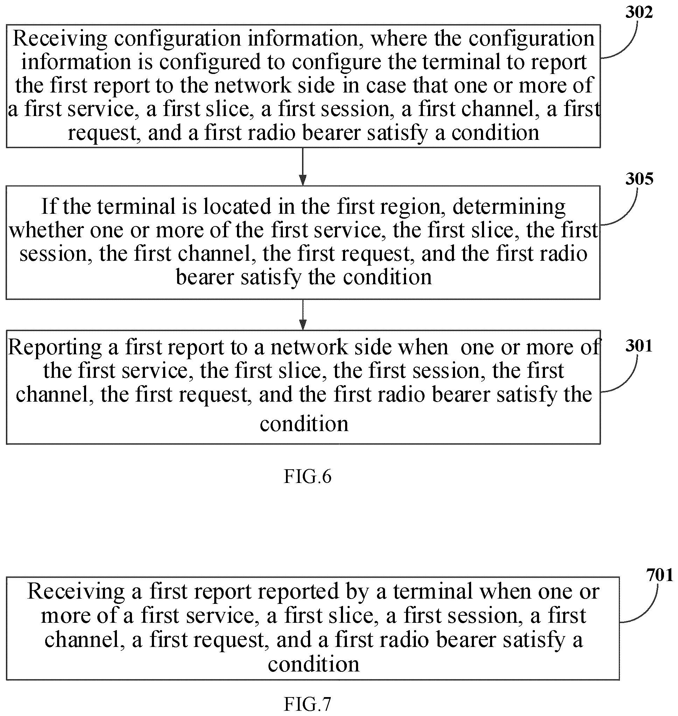

In an embodiment of the present application, referring to FIG. 6, between step 301 and step 302, the method further includes:
Step 305: if the terminal is located in the first region, determining whether one or more of the first service, the first slice, the first session, the first channel, the first request, and the first radio bearer satisfy a condition.

In an embodiment of the present disclosure, the information of the first region includes: a group of geographic location information (for example, a group of global positioning system (GPS) parameters), or a cell list, or a tracking area list, or a Bluetooth identifier, or a wireless local area network (WLAN) identifier.

The Bluetooth identifier refers to a region where the terminal can receive the Bluetooth identifier, the WLAN identifier refers to a region where the terminal can receive the WLAN identifier.

In an embodiment of the present disclosure, the information of the first region is configured by a network or agreed by a protocol.

In an embodiment of the present application, the method further includes:
reporting a terminal capability, where the terminal capability indicates whether the terminal supports reporting the first report to a network side if one or more of a first service, a first slice, a first session, a first channel, a first request, and a first radio bearer satisfy a condition.

The foregoing terminal capability may also be referred to as a service continuity monitoring reporting capability.

It should be noted that, in a manner in which the terminal reports the capability, an existing MDT report message or a measurement report can be used to report the capability, or other uplink signaling different from the MDT report message or the measurement report may be used to report the capability.

In an embodiment of the present application, the condition includes: a first condition and/or a second condition, where the first condition includes one or more of the following:
(1) disconnection of the first service; that is, the terminal cannot receive a specific multicast or broadcast service, or the terminal cannot receive a specific multicast or broadcast physical resource;
(2) disconnection, release, or re-mapping of the first network slice;
(3) disconnection of the first session;
(4) disconnection of the first radio bearer (for example, a data radio bearer (DRB));
(5) initiation failure of the first slice or the first service; wherein the initiation failure of the first slice or the first service means that the terminal initiates the first slice or the first service, but is rejected by a protocol layer in the terminal, rejected by a network side, or prohibited by a protocol; for example, a user clicks on a mobile phone application to trigger a specific slice or service, but the slice or service is rejected by a certain protocol layer in the mobile phone, rejected by the network side, or inhibited by a protocol; when the event occurs, the terminal logs the event and the reports a report to which the network side to which the terminal belongs, and reports the report to the network side, assist the network in determining that there is no coverage of the slice or service at the current location, and a network operator may increase the coverage of the slice or service in this region according to the above information, so as to meet customer requirements;
(6) failure of the first request; for example, failure of an initiation service request or a connection establishment request of a terminal, and the failure of the first request means that the terminal initiates a request, but is rejected by a protocol layer in the terminal, rejected by a network side, or prohibited by a protocol;
(7) the bit error rate of the first channel exceeds a preset threshold;
(8) failing to detect the first channel in the serving cell;
(9) an indicator parameter of the first service, the first slice, the first session, the first channel, the first request, or the first radio bearer is lower than a preset threshold; optionally, the indicator parameter may be a parameter related to a signal strength and/or an interference noise, for example, a reference signal receiving power (RSRP), a reference signal receiving quality (RSRQ), a cell selection receiving level value (Srxlev), a signal to interference plus noise ratio (SINR), etc.

The meanings of the disconnection and the release herein are similar, since the target base station does not support the service, the service is released.

The meaning of the remapping is that since the target base station does not support the current slice or service, the service may be re-mapped to another bearer, so as to continue to support the service.

The second condition includes one or more of the following:
(1) recovery of the first service;
(2) recovery of the first network slice;
(3) recovery of the first session;
(4) reconstruction of the first radio bearer.

In this embodiment of the present application, after receiving the report reported by the terminal, the network side determines the vulnerability of the service exists, and can adjust parameters such as an inclination angle and beamforming of a cell or a beam accordingly, to adjust the coverage of the specific service, the network slice, the session or the radio bearer at the interior, the exterior, and the boundary of the region, thereby effectively solving the problem of insufficient coverage of the specific service, the network slice, the session or the radio bearer in the region although coverage of a radio signal is perfect.

Referring to FIG. 7, an embodiment of the present application provides a transmission method, an entity of performing the method may be a network-side device, and the specific step includes:
Step 701: receiving a first report reported by a terminal when one or more of a first service, a first slice, a first session, a first channel, a first request, and a first radio bearer satisfy a condition.

In an embodiment of the present application, the first report may be configured to assist the network-side device in identifying a vulnerability of a service or a slice service, for example, the network-side device may learn, according to the first report, which geographic location, which beam, which session occurs interruption, in this way, the network-side device may adjust a downtilt angle, beamforming, and the like of an antenna according to the first report reported by the terminal, so that coverage of a cell boundary can satisfy coverage boundary requirement desired by the terminal.

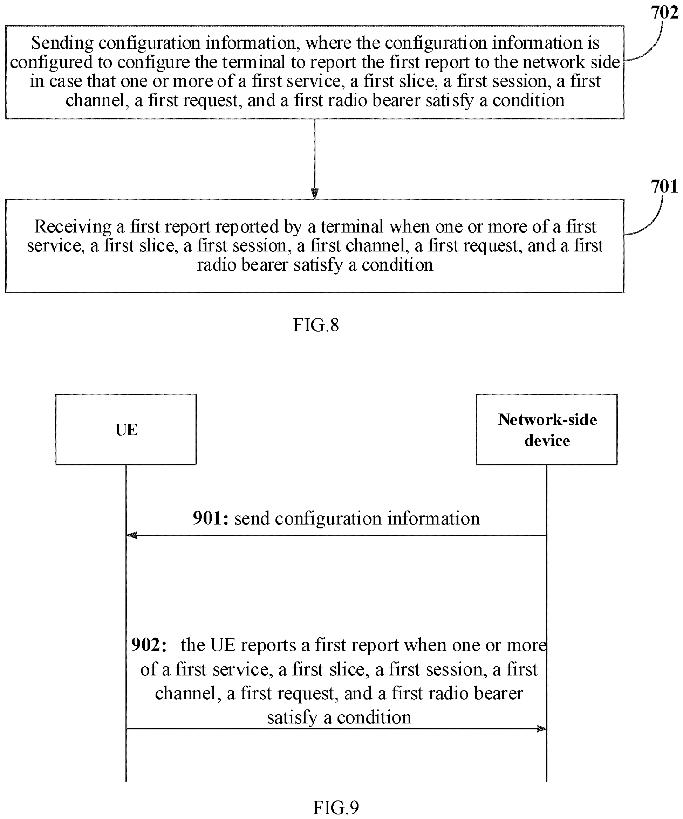

In an embodiment of the present application, referring to FIG. 8, the method further includes:
Step 702: sending configuration information, where the configuration information is configured to configure the terminal to report the first report to the network side in case that one or more of a first service, a first slice, a first session, a first channel, a first request, and a first radio bearer satisfy a condition.

In an embodiment of the present application, the method further includes:
receiving a terminal capability, where the terminal capability indicates whether the terminal supports reporting the first report to a network side if one or more of a first service, a first slice, a first session, a first channel, a first request, and a first radio bearer satisfy a condition.

In an embodiment of the present application, the condition includes: a first condition and/or a second condition, where the first condition includes one or more of the following:
(1) disconnection of the first service; that is, the terminal cannot receive a specific multicast or broadcast service, or the terminal cannot receive a specific multicast or broadcast physical resource;
(2) disconnection, release, or re-mapping of the first network slice;
(3) disconnection of the first session; (DRB));
(4) disconnection of the first radio bearer (for example, a data radio bearer
(5) initiation failure of the first slice or the first service; wherein the initiation failure of the first slice or the first service means that the terminal initiates the first slice or the first service, but is rejected by a protocol layer in the terminal, rejected by a network side, or prohibited by a protocol; for example, a user clicks on a mobile phone application to trigger a specific slice or service, but the slice or service is rejected by a certain protocol layer in the mobile phone, rejected by the network side, or inhibited by a protocol; when the event occurs, the terminal logs the event and the reports a report to which the network side to which the terminal belongs, and reports the report to the network side, to assist the network in determining that there is no coverage of the slice or service at the current location, and a network operator may increase the coverage of the slice or service in this region according to the above information, so as to meet customer requirements;
(6) failure of the first request; for example, failure of an initiation service request or a connection establishment request of a terminal, and the failure of the first request means that the terminal initiates a request, but is rejected by a protocol layer in the terminal, rejected by a network side, or prohibited by a protocol;
(7) the bit error rate of the first channel exceeds a preset threshold;
(8) failing to detect the first channel in the serving cell;
(9) an indicator parameter of the first service, the first slice, the first session, the first channel, the first request, or the first radio bearer is lower than a preset threshold; optionally, the indicator parameter may be a parameter related to a signal strength and/or an interference noise, for example, a RSRP, a RSRQ, a Srxlev, a SINR, etc.

The meanings of the disconnection and the release herein are similar, since the target base station does not support the service, the service is released.

The meaning of the remapping is that since the target base station does not support the current slice or service, the service may be re-mapped to another bearer, so as to continue to support the service.

The second condition includes one or more of the following:
(1) recovery of the first service;
(2) recovery of the first network slice;
(3) recovery of the first session;
(4) reconstruction of the first radio bearer.

In an embodiment of the present application, the configuration information further includes one or more of the following:
(1) first time information, where the first time information indicates a time interval at which the terminal reports the first report; for example, the first time information indicates the time interval (T) between two consecutive reports of the first report reported by the terminal, that is, after reporting once by the terminal, reporting is not made again within the time interval T, and excessive repeated reports are avoided;
(2) the number of disconnections of the first service and/or a duration of disconnection of the first service;
(3) the number of disconnections, releases, or remapping of a network slice corresponding to the first service and/or a duration of disconnection, release, or remapping of a network slice corresponding to the first service;
(4) the number of disconnections of a session corresponding to the first service and/or a duration of disconnection of a session corresponding to the first service;
(5) the number of disconnections of a radio bearer corresponding to the first service and/or a duration of disconnection of a radio bearer corresponding to the first service;
(6) an identifier of the first service;
(7) an identifier of the first session; for example, a identified slice ID (i.e. S-NSSAI) is disconnected;
(8) an identifier of the first slice; for example, the radio bearer corresponding to the identified 5QI is disconnected;
(9) an identifier of the first radio bearer; for example, the session corresponding to the identified 5QI is disconnected;
(10) an identifier of the first channel;
(11) an identifier of the first request.

In an embodiment of the present application, the first report includes one or more of the following:
(1) information of a source cell; for example, the ID of the source cell that is handed over or reselected;
(2) information of a target cell; for example, the ID of the target cell that is handed over or reselected;
(3) information of a reconnected cell; the reconnection refers to assuming that the present handover to the target cell fails, the terminal is reconnected to the third cell, and the third cell is a reconnected cell;
(4) beam information of a source cell; for example, a beam ID of a source cell that is handed over or reselected;
(5) beam information of the target cell; for example, a beam ID of the target cell that is handed over or reselected;
(6) location information of the terminal;
(7) second time information, where the second time information indicates a time instant at which the terminal obtains or records a first report;
(8) third time information, where the third time information represents a time instant at which the condition is satisfied or a duration for which the condition is satisfied;
(9) information of a slice and/or the number of initiation failures, disconnections, release, or remapping of the slice and/or a duration of initiation failure, disconnection, release, or remapping of the slice; for example, the information of the slice includes a slice ID or a slice group ID;
(10) an identifier of a radio bearer and/or the number of disconnections of the radio bearer and/or a duration of disconnection of the radio bearer;
(11) an identifier of a service and/or the number of initiation failures or disconnections of the service and/or a duration of initiation failure or disconnection of the service;
(12) an identifier of the session and/or the number of disconnections of the session and/or a duration of disconnection of the session;
(13) an identifier of a channel and/or the number of disconnections of the channel and/or a duration of disconnection of the channel;
(14) an identifier of a request and/or the number of disconnections of the request and/or a duration of disconnection of the request.

In this embodiment of the present application, after receiving the first report reported by the terminal, the network side determines the vulnerability of the service exists, and can adjust parameters such as the inclination angle and the beamforming of the cell or the beam according to the first report, so as to adjust the coverage of a certain service, a certain slice, a certain session, a certain channel, a certain request or a certain radio bearer at the interior, the exterior, and the boundary of the region, thereby effectively solving the problem of insufficient coverage of the certain service, the certain slice, the certain session, the certain channel, the certain request or the certain radio bearer in the region although coverage of a radio signal is perfect.

Referring to FIG. 9, the specific steps include:
Step 901: the network side device sends configuration information to the terminal;
Step 902: the terminal reports the first report when one or more of the first service, the first slice, the first session, the first channel, the first request, and the first radio bearer satisfy a condition.

In this embodiment of the present application, after receiving the first report reported by the terminal, the network side determines the vulnerability of the service exists, and can adjust parameters such as the inclination angle and the beamforming of the cell or the beam according to the first report, so as to adjust the coverage of a certain service, a certain slice, a certain session, a certain channel, a certain request or a certain radio bearer at the interior, the exterior, and the boundary of the region, thereby effectively solving the problem of insufficient coverage of the certain service, the certain slice, the certain session, the certain channel, the certain request or the certain radio bearer in the region although coverage of a radio signal is perfect.

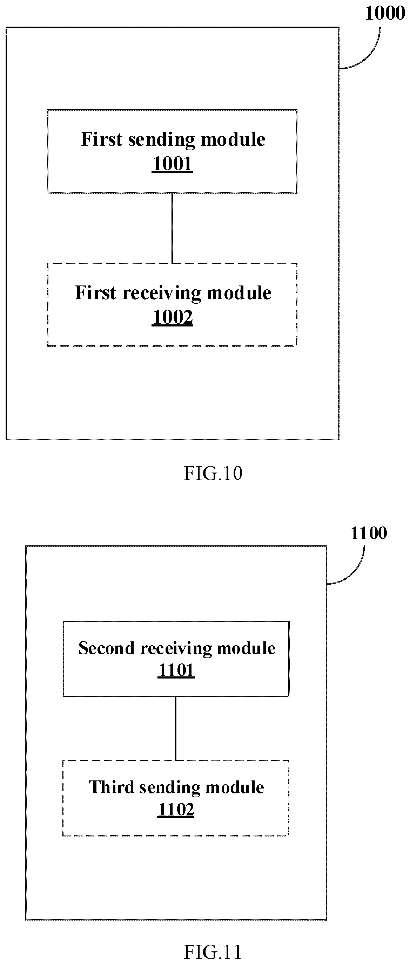

Referring to FIG. 10, an embodiment of the present application provides a transmission apparatus, applied to a terminal. The apparatus 1000 includes:
a first sending module 1001 configured to report a first report to a network side when one or more of a first service, a first slice, a first session, a first channel, a first request, and a first radio bearer satisfy a condition.

In an embodiment of the present application, the apparatus 1000 further includes:
a first receiving module 1002 configured to receive configuration information, where the configuration information is configured to configure the terminal to report the first report to the network side in case that one or more of a first service, a first slice, a first session, a first channel, a first request, and a first radio bearer satisfy a condition.

In another embodiment of the present application, the first receiving module 1002 is further configured to:
if the terminal is in a connected state, report the first report to the network side if one or more of the first service, the first slice, the first session, the first channel, the first request, and the first radio bearer satisfy a condition;
if the terminal is in an idle state or an inactive state, in a case that one or more of the first service, the first slice, the first session, the first channel, the first request, and the first radio bearer satisfy a condition, record the first report, and after the terminal enters the connected state, report the first report to the network side.

In an embodiment of the present application, the apparatus 1000 further includes:
a determining module, configured to if the terminal is located in the first region, determine whether one or more of the first service, the first slice, the first session, the first channel, the first request, and the first radio bearer satisfy a condition.

In an embodiment of the present disclosure, the information of the first region includes: a group of geographic location information, or a cell list, or a tracking area list, or a Bluetooth identifier, or a WLAN identifier.

In an embodiment of the present disclosure, the information of the first region is configured by a network or agreed by a protocol.

In an embodiment of the present application, the apparatus 1000 further includes:
a second sending module, configured to report a terminal capability, where the terminal capability indicates whether the terminal supports reporting the first report to a network side if one or more of a first service, a first slice, a first session, a first channel, a first request, and a first radio bearer satisfy a condition.

In an embodiment of the present application, the condition includes: a first condition and/or a second condition, where the first condition includes one or more of the following:
(1) disconnection of the first service; that is, the terminal cannot receive a specific multicast or broadcast service, or the terminal cannot receive a specific multicast or broadcast physical resource;
(2) disconnection, release, or re-mapping of the first network slice;
(3) disconnection of the first session; (DRB));
(4) disconnection of the first radio bearer (for example, a data radio bearer
(5) initiation failure of the first slice or the first service; wherein the initiation failure of the first slice or the first service means that the terminal initiates the first slice or the first service, but is rejected by a protocol layer in the terminal, rejected by a network side, or prohibited by a protocol;
(6) failure of the first request; for example, failure of an initiation service request or a connection establishment request of a terminal, and the failure of the first request means that the terminal initiates a request, but is rejected by a protocol layer in the terminal, rejected by a network side, or prohibited by a protocol;
(7) the bit error rate of the first channel exceeds a preset threshold;
(8) failing to detect the first channel in the serving cell;
(9) an indicator parameter of the first service, the first slice, the first session, the first channel, the first request, or the first radio bearer is lower than a preset threshold; optionally, the indicator parameter may be a parameter related to a signal strength and/or an interference noise, for example, a RSRP, a RSRQ, a Srxlev, a SINR, etc.

The second condition includes one or more of the following:
(1) recovery of the first service;
(2) recovery of the first network slice;
(3) recovery of the first session;
(4) reconstruction of the first radio bearer.

In an embodiment of the present application, the configuration information further includes one or more of the following:
(1) first time information, where the first time information indicates a time interval at which the terminal reports the first report; for example, the first time information indicates the time interval (T) between two consecutive reports of the first report reported by the terminal, that is, after reporting once by the terminal, reporting is not made again within the time interval T, and excessive repeated reports are avoided;
(2) the number of disconnections of the first service and/or a duration of disconnection of the first service;
(3) the number of disconnections, releases, or remapping of a network slice corresponding to the first service and/or a duration of disconnection, release, or remapping of a network slice corresponding to the first service;
(4) the number of disconnections of a session corresponding to the first service and/or a duration of disconnection of a session corresponding to the first service;
(5) the number of disconnections of a radio bearer corresponding to the first service and/or a duration of disconnection of a radio bearer corresponding to the first service;
(6) an identifier of the first service;
(7) an identifier of the first session; for example, a identified slice ID (i.e. S-NSSAI) is disconnected;
(8) an identifier of the first slice; for example, the radio bearer corresponding to the identified 5QI is disconnected;
(9) an identifier of the first radio bearer; for example, the session corresponding to the identified 5QI is disconnected;
(10) an identifier of the first channel;
(11) an identifier of the first request.

In an embodiment of the present application, the first report includes one or more of the following:
(1) information of a source cell; for example, the ID of the source cell that is handed over or reselected;
(2) information of a target cell; for example, the ID of the target cell that is handed over or reselected;
(3) information of a reconnected cell; the reconnection refers to assuming that the present handover to the target cell fails, the terminal is reconnected to the third cell, and the third cell is a reconnected cell;
(4) beam information of a source cell; for example, a beam ID of a source cell that is handed over or reselected;
(5) beam information of the target cell; for example, a beam ID of the target cell that is handed over or reselected;
(6) location information of the terminal;
(7) second time information, where the second time information indicates a time instant at which the terminal obtains or records a first report;
(8) third time information, where the third time information represents a time instant at which the condition is satisfied or a duration for which the condition is satisfied;
(9) information of a slice and/or the number of initiation failures, disconnections, release, or remapping of the slice and/or a duration of initiation failure, disconnection, release, or remapping of the slice; for example, the information of the slice includes a slice ID or a slice group ID;
(10) an identifier of a radio bearer and/or the number of disconnections of the radio bearer and/or a duration of disconnection of the radio bearer;
(11) an identifier of a service and/or the number of initiation failures or disconnections of the service and/or a duration of initiation failure or disconnection of the service;
(12) an identifier of the session and/or the number of disconnections of the session and/or a duration of disconnection of the session;
(13) an identifier of a channel and/or the number of disconnections of the channel and/or a duration of disconnection of the channel;
(14) an identifier of a request and/or the number of disconnections of the request and/or a duration of disconnection of the request.

The apparatus provided in the embodiments of the present application can implement various processes implemented by the method embodiment shown in FIG. 3 to FIG. 6, and achieve the same technical effect, and in order to avoid repetition, details are not described herein again.

Referring to FIG. 11, an embodiment of the present application provides a transmission apparatus, applied to a network-side device. The apparatus 1100 includes:
a second receiving module 1101 configured to receive a first report reported by a terminal when one or more of a first service, a first slice, a first session, a first channel, a first request, and a first radio bearer satisfy a condition.

In an embodiment of the present application, the apparatus 1100 further includes:
a third sending module 1102, configured to send configuration information, where the configuration information is configured to configure the terminal to report the first report to the network side in case that one or more of a first service, a first slice, a first session, a first channel, a first request, and a first radio bearer satisfy a condition.

In an embodiment of the present application, the apparatus 1100 further includes:
a third receiving module, configured to receive a terminal capability, where the terminal capability indicates whether the terminal supports reporting the first report to a network side if one or more of a first service, a first slice, a first session, a first channel, a first request, and a first radio bearer satisfy a condition.

In an embodiment of the present application, the condition for triggering includes a first condition and/or a second condition, where the first condition includes one or more of the following:
(1) disconnection of the first service; that is, the terminal cannot receive a specific multicast or broadcast service, or the terminal cannot receive a specific multicast or broadcast physical resource;
(2) disconnection, release, or re-mapping of the first network slice;
(3) disconnection of the first session; (DRB));
(4) disconnection of the first radio bearer (for example, a data radio bearer
(5) initiation failure of the first slice or the first service; wherein the initiation failure of the first slice or the first service means that the terminal initiates the first slice or the first service, but is rejected by a protocol layer in the terminal, rejected by a network side, or prohibited by a protocol;
(6) failure of the first request; for example, failure of an initiation service request or a connection establishment request of a terminal, and the failure of the first request means that the terminal initiates a request, but is rejected by a protocol layer in the terminal, rejected by a network side, or prohibited by a protocol;
(7) the bit error rate of the first channel exceeds a preset threshold;
(8) failing to detect the first channel in the serving cell;
(9) an indicator parameter of the first service, the first slice, the first session, the first channel, the first request, or the first radio bearer is lower than a preset threshold; optionally, the indicator parameter may be a parameter related to a signal strength and/or an interference noise, for example, a RSRP, a RSRQ, a Srxlev, a SINR, etc.

The second condition includes one or more of the following:
(1) recovery of the first service;
(2) recovery of the first network slice;
(3) recovery of the first session;
(4) reconstruction of the first radio bearer.

In an embodiment of the present application, the configuration information further includes one or more of the following:
(1) first time information, where the first time information indicates a time interval at which the terminal reports the first report; for example, the first time information indicates the time interval (T) between two consecutive reports of the first report reported by the terminal, that is, after reporting once by the terminal, reporting is not made again within the time interval T, and excessive repeated reports are avoided;
(2) the number of disconnections of the first service and/or a duration of disconnection of the first service;
(3) the number of disconnections, releases, or remapping of a network slice corresponding to the first service and/or a duration of disconnection, release, or remapping of a network slice corresponding to the first service;
(4) the number of disconnections of a session corresponding to the first service and/or a duration of disconnection of a session corresponding to the first service;
(5) the number of disconnections of a radio bearer corresponding to the first service and/or a duration of disconnection of a radio bearer corresponding to the first service;
(6) an identifier of the first service;
(7) an identifier of the first session; for example, a identified slice ID (i.e. S-NSSAI) is disconnected;
(8) an identifier of the first slice; for example, the radio bearer corresponding to the identified 5QI is disconnected;
(9) an identifier of the first radio bearer; for example, the session corresponding to the identified 5QI is disconnected;
(10) an identifier of the first channel;
(11) an identifier of the first request.

In an embodiment of the present application, the first report includes one or more of the following:
(1) information of a source cell; for example, the ID of the source cell that is handed over or reselected;
(2) information of a target cell; for example, the ID of the target cell that is handed over or reselected;
(3) information of a reconnected cell; the reconnection refers to assuming that the present handover to the target cell fails, the terminal is reconnected to the third cell, and the third cell is a reconnected cell;
(4) beam information of a source cell; for example, a beam ID of a source cell that is handed over or reselected;
(5) beam information of the target cell; for example, a beam ID of the target cell that is handed over or reselected;
(6) location information of the terminal;
(7) second time information, where the second time information indicates a time instant at which the terminal obtains or records a first report;
(8) third time information, where the third time information represents a time instant at which the condition is satisfied or a duration for which the condition is satisfied;
(9) information of a slice and/or the number of initiation failures, disconnections, release, or remapping of the slice and/or a duration of initiation failure, disconnection, release, or remapping of the slice; for example, the information of the slice includes a slice ID or a slice group ID;
(10) an identifier of a radio bearer and/or the number of disconnections of the radio bearer and/or a duration of disconnection of the radio bearer;
(11) an identifier of a service and/or the number of initiation failures or disconnections of the service and/or a duration of initiation failure or disconnection of the service;
(12) an identifier of the session and/or the number of disconnections of the session and/or a duration of disconnection of the session;
(13) an identifier of a channel and/or the number of disconnections of the channel and/or a duration of disconnection of the channel;
(14) an identifier of a request and/or the number of disconnections of the request and/or a duration of disconnection of the request.

The apparatus provided in this embodiment of the present application can implement the processes implemented by the method embodiments shown in FIG. 7 to FIG. 8, and achieve the same technical effect, and in order to avoid repetition, details are not described herein again.

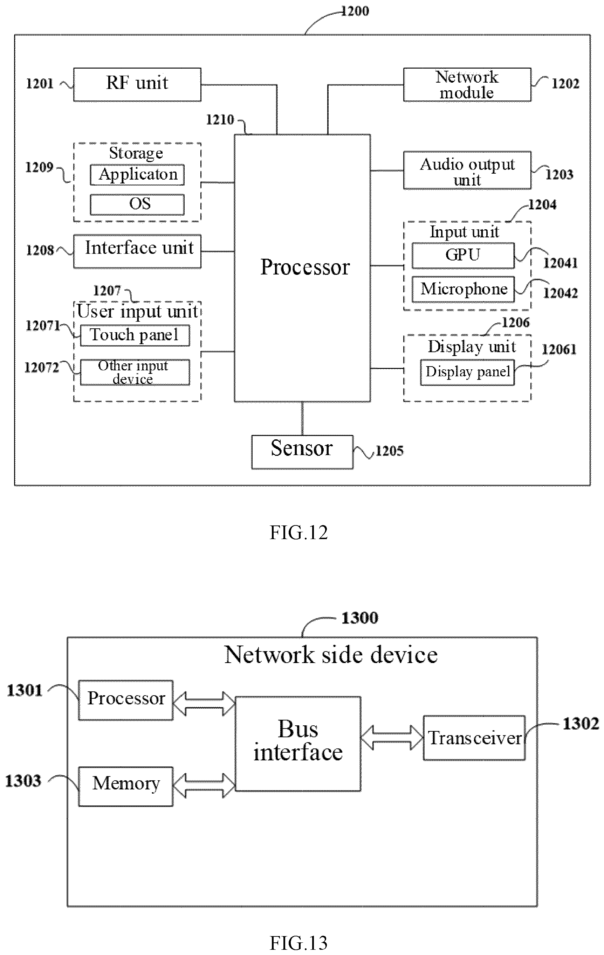

FIG. 12 is a schematic diagram of a hardware structure of a terminal according to some embodiments of the present application, where the terminal 1200 includes but is not limited to: a radio frequency unit 1201, a network module 1202, an audio output unit 1203, an input unit 1204, a sensor 1205, a display unit 1206, a user input unit 1207, an interface unit 1208, a storage 1209, and a processor 1210.

A person skilled in the art may understand that the terminal 1200 may further include a power supply (such as a battery) for supplying power to each component, and the power supply may be logically connected to the processor 1210 by means of the power management system, thereby implementing functions such as management of charging, discharging, and power consumption management by means of the power management system. The terminal structure shown in FIG. 12 does not constitute a limitation on the terminal, and the terminal may include more or fewer components than those shown in the figure, or some components may be combined or different component arrangements may be provided, which will not be repeated here.

It should be understood that in this embodiment of the present application, the input unit 1204 may include a graphics processing unit (GPU) 12041 and a microphone 12042, and the graphics processing unit 7041 processes image data of a static picture or a video obtained by an image capturing device (such as a camera) in a video capture mode or an image capture mode. The display unit 1206 may include a display panel 12061, and the display panel 12061 may be configured in the form of a liquid crystal display, an organic light emitting diode, etc. The user input unit 1207 includes a touch panel 12071 and another input device 12072. The touch panel 12071 is also referred to as a touch screen. The touch panel 12071 may include two parts: a touch detection device and a touch controller. The another input device 12072 may include, but are not limited to, a physical keyboard, a function key (such as a volume control button, a switch button, etc.), a trackball, a mouse, and an operating rod, and details are not described herein again.

In this embodiment of the present application, the radio frequency unit 1201 receives downlink data from the network side device and processes the downlink data to be sent to the processor 1210; in addition, the uplink data is sent to the network side device. Generally, the radio frequency unit 1201 includes, but is not limited to, an antenna, at least one amplifier, a transceiver, a coupler, a low noise amplifier, a duplexer, etc.

The storage 1209 may be configured to store software programs or instructions and various data. The storage 1209 may mainly include a storage program or an instruction area and a storage data area, where the storage program or the instruction area may store an operating system, an application program or instruction required by at least one function (such as a sound playing function, an image playing function, etc.). In addition, the storage 1209 may include a high-speed random access memory, and may further include a non-volatile memory, wherein the non-volatile memory may be a read-only memory (ROM), a programmable read-only memory (PROM), an erasable programmable read-only memory (erasable PROM, EPROM), an electrically erasable programmable read-only memory (EEPROM), or a flash memory. For example, at least one disk storage device, flash memory device, or other non-volatile solid state storage device.

The processor 1210 may include one or more processing units; optionally, the processor 1210 may integrate an application processor and a modulation and demodulation processor, where the application processor mainly processes an operating system, a user interface, an application program, or an instruction, etc. and the modulation and demodulation processor mainly processes wireless communications, such as a baseband processor. It may be understood that the above-mentioned modulation and demodulation processor may also not be integrated into the processor 1210.

The terminal provided in this embodiment of the present application can implement each process implemented by the method embodiments shown in FIG. 3 to FIG. 6, and achieve the same technical effect, and in order to avoid repetition, details are not described herein again.

Referring to FIG. 13, FIG. 13 is a structural diagram of a network-side device according to an embodiment of the present disclosure, as shown in FIG. 13, the network-side device 1300 includes a processor 1301, a transceiver 1302, a memory 1303, and a bus interface, wherein:

In an embodiment of the present disclosure, the network-side device 1300 further includes a program stored on the memory 603 and executable on the processor 1301, and when the program is executed by the processor 1301, the steps of the embodiments shown in FIG. 7 to FIG. 8 are implemented.

In FIG. 13, the bus architecture may include any number of interconnected buses and bridges, specifically various circuits such as one or more processors represented by processor 1301 and the memory represented by the memory 1303 are linked together. The bus architecture may also link together various other circuits, such as peripheral devices, voltage regulators, and power management circuits, etc. which are well known in the art, and therefore are not further described herein. The bus interface provides an interface. The transceiver 1302 may be a plurality of elements, i.e. include a transmitter and a receiver, and provide a unit for communicating with various other devices on a transmission medium.

The processor 1301 is responsible for managing a bus architecture and general processing, and the memory 1303 may store data used by the processor 1301 when performing an operation.

The network-side device provided in this embodiment of the present application can implement each process implemented by the method embodiments shown in FIG. 7 to FIG. 8, and achieve the same technical effect, and in order to avoid repetition, details are not described herein again.

Embodiments of the present application further provide a readable storage medium, where a program or an instruction is stored on the readable storage medium, and when the program or the instruction is executed by the processor, each process of the method embodiments shown in FIG. 3 to FIG. 8 is implemented, and the same technical effect can be achieved. In order to avoid repetition, detailed description is not repeated herein.

The processor is a processor in the terminal in the foregoing embodiment. The readable storage medium includes a computer readable storage medium, such as a computer read-only memory (ROM), a random access memory (RAM), a magnetic disk, or an optical disc.

The steps of the method or algorithm described in connection with the disclosure of the present application may be implemented in a hardware manner, or may be implemented in a manner in which a processor executes a software instruction. The software instructions may be composed of corresponding software modules, which may be stored in RAM, flash memory, ROM, EPROM, EEPROM, registers, hard disks, mobile hard disks, read-only optical disks, or any other form of storage medium well known in the art. An exemplary storage medium is coupled to the processor to enable the processor to read information from the storage medium and write information to the storage medium. Certainly, the storage medium may also be a component of the processor. The processor and the storage medium may be carried in an ASIC. In addition, the ASIC may be carried in a core network interface device. Certainly, the processor and the storage medium may also exist in the core network interface device as discrete components.

A person skilled in the art should be aware that, in the foregoing one or more examples, the functions described in the present application may be implemented by hardware, software, firmware, or any combination thereof. When implemented using software, these functions may be stored in a computer-readable medium or transmitted as one or more instructions or codes on a computer-readable medium. A computer-readable medium includes a computer storage medium and a communication medium, wherein the communication medium includes any medium that facilitates transfer of a computer program from one place to another. The storage medium may be any available medium accessible by a general purpose or special purpose computer.

The objectives, technical solutions, and beneficial effects of the present application are further described in detail above, and it should be understood that the foregoing is merely specific embodiments of the present application, and is not used to limit the protection scope of the present application. Any modification, equivalent replacement, improvement, etc. made on the basis of the technical solutions of the present application shall fall within the protection scope of the present application.

A person skilled in the art should understand that the embodiments of the present application may be provided as a method, a system, or a computer program product. Therefore, the embodiments of the present application may be in the form of an entirely hardware embodiment, an entirely software embodiment, or an embodiment combining software and hardware aspects. Moreover, the embodiments of the present application may take the form of a computer program product implemented on one or more computer-usable storage media (including but not limited to a disk memory, a CD-ROM, an optical memory, etc.) including computer-usable program codes.

Embodiments of the present application are described with reference to a flowchart and/or a block diagram of a method, a device (system), and a computer program product according to some embodiments of the present application. It should be understood that each flow and/or block in the flowcharts and/or block diagrams, and combinations of flows and/or blocks in the flowcharts and/or block diagrams, can be implemented by computer program instructions. These computer program instructions may be provided to a processor of a general purpose computer, a special purpose computer, an embedded processor, or other programmable data processing device to generate a machine such that instructions executed by a processor of the computer or other programmable data processing device generate means for implementing particular functions in one or more flows of the flowchart and/or one or more blocks of the block diagram.

These computer program instructions may also be stored in a computer-readable memory that can direct a computer or other programmable data processing device to operate in a particular manner such that the instructions stored in the computer-readable memory produce a product that includes an instruction device that implements particular functions in one or more flows of the flowchart and/or one or more blocks of the block diagram.

These computer program instructions may also be loaded onto a computer or other programmable data processing device such that a series of operational steps are performed on a computer or other programmable device to produce a computer-implemented process, such that the instructions executed on the computer or other programmable device provide steps for implementing particular functions in one or more flows of the flowchart and/or one or more blocks of the block diagram.

It may be understood that these embodiments described in the present application may be implemented by hardware, software, firmware, middleware, microcode, or a combination thereof. For implementations by hardware, modules, units, sub-modules, subunits, etc. may be implemented in one or more Application Specific Integrated Circuits (ASIC), Digital Signal Processing (DSP), Digital Signal Processing Devices (DSP Device, DSPD), Programmable Logic Devices (PLD), a Field-Programmable Gate Array (FPGA), a general-purpose processor, a controller, a microcontroller, a microprocessor, other electronic units for performing the functions described in the present application, or a combination thereof.

Obviously, those skilled in the art may make various modifications and variations to the embodiments of the present application without departing from the spirit and scope of the present disclosure. Thus, if these modifications and variations of the embodiments of the present application fall within the scope of the claims of the present application and the equivalent technologies thereof, the present application is also intended to include these modifications and variations.

## Claims

1. A transmission method performed by a terminal, comprising:
reporting a first report to a network side in a case that one or more of a first service, a first slice, a first session, a first channel, a first request, and a first radio bearer satisfy a condition.

2. The method according to claim 1, further comprising:
receiving configuration information, wherein the configuration information is configured to configure the terminal to report the first report to the network side in case that one or more of the first service, the first slice, the first session, the first channel, the first request, and the first radio bearer satisfy the condition.

3. The method according to claim 1, wherein reporting the first report to the network side comprises:
if the terminal is in a connected state, reporting the first report to the network side;
if the terminal is in an idle state or an inactive state, recording the first report, and reporting the first report to the network side.

4. The method according to claim 1 or 2, further comprising:
if the terminal is located in a first region, determining whether one or more of the first service, the first slice, the first session, the first channel, the first request, and the first radio bearer satisfy the condition.

5. The method according to claim 4, wherein the information of the first region comprises:
a group of geographic location information, or a cell list, or a tracking area list, or a bluetooth identifier, or a wireless local area network (WLAN) identifier.

6. The method according to claim 4, wherein the information of the first region is configured by a network side or agreed by a protocol.

7. The method according to claim 1, further comprising:
reporting a terminal capability, wherein the terminal capability indicates whether the terminal supports reporting the first report to the network side in a case that one or more of the first service, the first slice, the first session, the first channel, the first request, and the first radio bearer satisfy the condition.

8. The method according to claim 1, wherein the condition comprises: a first condition and/or a second condition,
the first condition comprises one or more of following:
disconnection of the first service,
disconnection, release, or re-mapping of the first slice,
disconnection of the first session,
disconnection of the first radio bearer,
initiation failure of the first slice or the first service,
failure of the first request,
a bit error rate of the first channel exceeding a preset threshold,
failing to detect the first channel in a serving cell,
an indicator parameter of the first service, the first slice, the first session, the first channel, the first request, or the first radio bearer being lower than a preset threshold;
the second condition comprises one or more of following:
recovery of the first service, recovery of the first slice, recovery of the first session, reconstruction of the first radio bearer.

9. The method according to claim 8, wherein the initiation failure of the first slice or the first service indicates that the terminal initiates the first slice or the first service, but is rejected by a protocol layer in the terminal, rejected by the network side, or prohibited by a protocol;
the failure of the first request indicates that the terminal initiates the first request, but is rejected by a protocol layer in the terminal, rejected by the network side, or prohibited by a protocol.

10. The method according to claim 2, wherein the configuration information further comprises one or more of following:
first time information, wherein the first time information indicates a time interval at which the terminal reports the first report;
a quantity of initiation failures or disconnections of the first service and/or a duration of initiation failure or disconnection of the first service;
a quantity of initiation failures, disconnections, releases, or remapping of the first slice and/or a duration of initiation failure, disconnection, release, or remapping of the first slice;
a quantity of disconnections of a session of the first service and/or a duration of disconnection of a session of the first service;
a quantity of disconnections of a radio bearer of the first service and/or a duration of disconnection of a radio bearer of the first service;
an identifier of the first service;
an identifier of the first session;
an identifier of the first slice;
an identifier of the first radio bearer;
an identifier of the first channel;
an identifier of the first request.

11. The method according to claim 1, wherein the first report comprises one or more of following:
information of a source cell;
information of a target cell;
information of a reconnected cell;
beam information of a source cell;
beam information of a target cell;
location information of the terminal;
second time information, wherein the second time information indicates a time instant at which the terminal obtains or records the first report;
third time information, wherein the third time information represents a time instant at which the condition is satisfied or a duration for which the condition is satisfied;
information of a slice and/or a quantity of initiation failures, disconnections, release, or remapping of the slice and/or a duration of initiation failure, disconnection, release, or remapping of the slice;
an identifier of a radio bearer and/or a quantity of disconnections of the radio bearer and/or a duration of disconnection of the radio bearer;
an identifier of a service and/or a quantity of initiation failures or disconnections of the service and/or a duration of initiation failure or disconnection of the service;
an identifier of a session and/or a quantity of disconnections of the session and/or a duration of disconnection of the session;
an identifier of a channel and/or a quantity of disconnections of the channel and/or a duration of disconnection of the channel;
an identifier of a request and/or a quantity of disconnections of the request and/or a duration of disconnection of the request.

12. A transmission method performed by a network-side device, comprising:
receiving a first report reported by a terminal in a case that one or more of a first service, a first slice, a first session, a first channel, a first request, and a first radio bearer satisfy a condition.

13. The method according to claim 12, further comprising:
sending configuration information, wherein the configuration information is configured to configure the terminal to report the first report in case that one or more of the first service, the first slice, the first session, the first channel, the first request, and the first radio bearer satisfy the condition.

14. The method according to claim 12, further comprising:
receiving a terminal capability, wherein the terminal capability indicates whether the terminal supports reporting the first report to the network side if one or more of the first service, the first slice, the first session, the first channel, the first request, and the first radio bearer satisfy the condition.

15. The method according to claim 12, wherein the condition comprises: a first condition and/or a second condition,
the first condition comprises one or more of following:
disconnection of the first service,
disconnection, release, or re-mapping of the first slice,
disconnection of the first session,
disconnection of the first radio bearer,
initiation failure of the first slice or the first service,
failure of the first request,
a bit error rate of the first channel exceeding a preset threshold,
failing to detect the first channel in a serving cell,
an indicator parameter of the first service, the first slice, the first session, the first channel, the first request, or the first radio bearer being lower than a preset threshold;
the second condition comprises one or more of following:
recovery of the first service, recovery of the first slice, recovery of the first session, reconstruction of the first radio bearer.

16. The method according to claim 15, wherein the initiation failure of the first slice or the first service indicates that the terminal initiates the first slice or the first service, but is rejected by a protocol layer in the terminal, rejected by the network side, or prohibited by a protocol;
the failure of the first request indicates that the terminal initiates the first request, but is rejected by a protocol layer in the terminal, rejected by the network side, or prohibited by a protocol.

17. The method according to claim 13, wherein the configuration information further comprises one or more of following:
first time information, wherein the first time information indicates a time interval at which the terminal reports the first report;
a quantity of initiation failures or disconnections of the first service and/or a duration of initiation failure or disconnection of the first service;
a quantity of initiation failures, disconnections, releases, or remapping of the first slice and/or a duration of initiation failure, disconnection, release, or remapping of the first slice;
a quantity of disconnections of a session of the first service and/or a duration of disconnection of a session of the first service;
a quantity of disconnections of a radio bearer of the first service and/or a duration of disconnection of a radio bearer of the first service;
an identifier of the first service;
an identifier of the first session;
an identifier of the first slice;
an identifier of the first radio bearer;
an identifier of the first channel;
an identifier of the first request.

18. The method according to claim 12, wherein the first report comprises one or more of following:
information of a source cell;
information of a target cell;
information of a reconnected cell;
beam information of a source cell;
beam information of a target cell;
location information of the terminal;
second time information, wherein the second time information indicates a time instant at which the terminal obtains or records the first report;
third time information, wherein the third time information represents a time instant at which the condition is satisfied or a duration for which the condition is satisfied;
information of a slice and/or a quantity of initiation failures, disconnections, release, or remapping of the slice and/or a duration of initiation failure, disconnection, release, or remapping of the slice;
an identifier of a radio bearer and/or a quantity of disconnections of the radio bearer and/or a duration of disconnection of the radio bearer;
an identifier of a service and/or a quantity of initiation failures or disconnections of the service and/or a duration of initiation failure or disconnection of the service;
an identifier of a session and/or a quantity of disconnections of the session and/or a duration of disconnection of the session;
an identifier of a channel and/or a quantity of disconnections of the channel and/or a duration of disconnection of the channel.

19. A transmission apparatus, applied to a terminal, and comprising:
a first sending module, configured to report a first report to a network side in a case that one or more of a first service, a first slice, a first session, a first channel, a first request, and a first radio bearer satisfy a condition.

20. A transmission apparatus, applied to a network-side device, and comprising:
a second receiving module, configured to receive a first report reported by a terminal in a case that one or more of a first service, a first slice, a first session, a first channel, a first request, and a first radio bearer satisfy a condition.

21. A terminal, comprising:
a processor, a memory, and a program stored on the memory and executable on the processor, wherein when the program is executed by the processor, the steps of the method according to any one of claims 1-11 are implemented.

22. A network side device, comprising:
a processor, a memory, and a program stored on the memory and executable on the processor, wherein when the program is executed by the processor, the steps of the method according to any one of claims 12-16 are implemented.

23. A readable storage medium, wherein a program is stored on the readable storage medium, and when the program is executed by a processor, the steps of the method according to any one of claims 1-16 are implemented.
